# EUROPÄISCHE PATENTSCHRIFT

(11) **EP 2 669 573 B1**
(45) Veröffentlichungstag und Bekanntmachung des Hinweises auf die Patenterteilung: **30.12.2015**
(21) Anmeldenummer: 13001200.8
(22) Anmeldetag: 11.03.2013
(51) Int. Cl.: F22B 37/74, F22D 7/12, F22B 37/22, G05D 7/06

(54) **Drosselvorrichtung**
Throttle device
Dispositif d'étranglement

(30) Priorität: 30.03.2012 DE 102012006624
(43) Veröffentlichungstag der Anmeldung: 04.12.2013
(73) Patentinhaber: Balcke-Dürr GmbH, 40882 Ratingen (DE)
(72) Erfinder: Klitzing, Birger, D-47807 Krefeld (DE); Telgen, Thomas, D-40882 Ratingen (DE); Stockfisch, Bernhard, D-40668 Meerbusch (DE); Seffrin, Florian, D-64285 Darmstadt (DE); Hoffmann, Klaus, D-41468 Neuss (DE)
(74) Vertreter: Heidler, Philipp

(56) Entgegenhaltungen:
- DE-A1-102010 040 208
- DE-B- 1 150 687
- FR-A- 1 352 958
- FR-A- 1 549 058
- US-A- 3 204 612

## Beschreibung

Die Erfindung betrifft eine Drosselvorrichtung zur Veränderung eines Drucks eines Fluids in einer Vielzahl von parallelen Abflüssen. Insbesondere betrifft die Erfindung eine Drosselvorrichtung oder variable Drossel aufweisend einen Sammler mit einem Zufluss für das Fluid und eine Vielzahl von Abflüssen für das Fluid. Ferner weist die Drosselvorrichtung ein Steuerelement auf, das zumindest teilweise in einem Innenraum des Sammlers bewegbar angeordnet ist. Ferner weist das Steuerelement eine Vielzahl von Öffnungen auf, wobei die Öffnungen in dem Steuerelement und die Abflüsse in dem Sammler derart ausgebildet und angeordnet sind, dass der Querschnitt einer Vielzahl von Fluidverbindungen zwischen dem Innenraum des Sammlers und einer Vielzahl von Abflüssen des Sammlers durch eine Relativbewegung des Steuerelements gegenüber dem Sammler veränderbar ist.

Sammler mit derartigen Drosselvorrichtungen werden in Dampferzeugern eingesetzt. Sie sind für Dampferzeuger mit Naturumlaufkesseln oder Zwangsdurchlaufkesseln geeignet.

Es sind Drosselvorrichtungen bekannt, die in Rohren von Rohrregistern angeordnet sind, um die Durchsatzmengen eines Fluids in den einzelnen Rohren unter verschiedenen Strömungsbedingungen einzustellen. Solche Drosselvorrichtungen sind jedoch je Rohr vorzusehen. Zur Steuerung von Durchflussmengen in mehreren Rohren gleichzeitig wurden weitere Vorrichtungen entwickelt.

Allerdings ist bei solchen Vorrichtungen mit mehreren Zuführungen auch zu beachten, dass Instabilitäten und Druckverluste auftreten können, die unerwünscht sind. Die Vorrichtung der DE 1 150 687 trägt dieser Problemstellung Rechnung und sorgt dafür, dass Eintrittsquerschnitte der Rohranschlüsse bei normaler Last ungedrosselt und bei Schwachlastbetrieb verengt werden.

Die Vorrichtung aus DE 1 150 687 weist einen Sammler oder eine Verteilerflasche mit einem Zufluss für ein Arbeitsmedium und parallele Abflüsse auf, die als Anschlussstutzen oder Rohrnippel an dem Sammler angeordnet sind. Im Inneren des Sammlers ist eine Steuerleiste oder ein Füllstück mit Einströmöffnungen eingeschoben, welche den Rohranschlüssen zugeordnet sind. Mit Hilfe der Steuerleiste im Sammler können alle Einströmöffnungen lastabhängig geöffnet oder verkleinert werden. Da auf jeder Seite der Steuerleiste nur jeweils eine Einströmöffnung angeordnet werden kann, ist die Vorrichtung der DE 1 150 687 in der Lage, für jeweils zwei parallele Reihen von Anschlussstutzen den Durchsatz für jeden Stutzen individuell, das heißt ohne ungedrosselten Fluss zwischen den Stutzen, zu drosseln und auf diese Weise einen gleichmäßigen Durchsatz auch im gedrosselten Zustand sicherzustellen.

Die Vorrichtung der DE 1 150 687 ist daher insbesondere zur Versorgung von Strahlungsheizflächen in Zwangslaufkesseln geeignet, die nur jeweils zwei parallele Reihen von Rohren aufweisen. Ist jedoch eine größere Anzahl paralleler Rohre gefordert, so müssen mehrere dieser Vorrichtungen parallel angeordnet werden, um die gewünschte Tiefe und Anzahl von Rohrreihen zu erreichen.

Eine weitere Drosselvorrichtung ist in Dokument US 3 204 612 A offenbart.

Der Erfindung liegt daher das Problem zugrunde, dass bei Verwendung der bekannten Vorrichtungen mehrere Drosselvorrichtungen parallel angeordnet angesteuert werden sollen, um für eine gewünschte Vielzahl von Rohren einen gewünschten gleichmäßigen Durchsatz zu erzielen.

Auf der Grundlage der geschilderten Problemstellung lag der vorliegenden Erfindung die Aufgabe zu Grunde, eine Drosselvorrichtung der eingangs genannten Art so weiterzubilden, dass diese für eine Vielzahl von parallelen Rohrreihen einen Druck oder Druckverlust einstellen kann.

Die Lösung der Aufgabe gelingt durch eine Drosselvorrichtung gemäß Anspruch 1, bei der das Steuerelement eine Hülse ist, wobei die Öffnungen in der Hülse derart angeordnet sind, dass sie zu den Abflüssen des Sammlers korrespondieren und die Hülse und Sammler gegeneinander abgedichtet sind, sodass in einem Bereich zwischen einer Außenwand der Hülse und einer Innenwand des Innenraum des Sammlers keine Fluidverbindung zwischen den Öffnungen der Hülse vorhanden ist.

Die erfindungsgemäße Drosselvorrichtung weist einen Sammler mit mindestens einem Innenraum, einem Zufluss und einer Vielzahl von Abflüssen für das Fluid auf. Weiterhin weist die Drosselvorrichtung eine Hülse auf, die zumindest teilweise in dem Innenraum des Sammlers beweglich angeordnet ist und die eine Vielzahl von Öffnungen aufweist, welche zu den Abflüssen des Sammlers in Zahl und Anordnung korrespondieren. Hülse und Sammler sind gegeneinander abgedichtet, sodass in einem Bereich, zwischen einer Außenwand der Hülse und einer Innenwand des Innenraums des Sammlers, kein Austausch des Fluids zwischen den Öffnungen der Hülse stattfindet. Die Öffnungen in der Hülse und die Abflüsse in dem Sammler sind derart ausgebildet und angeordnet, dass der Querschnitt einer Vielzahl von Fluidverbindung zwischen Innenraum der Hülse und einer Vielzahl von Abflüssen des Sammlers durch eine Relativbewegung der Hülse gegenüber dem Sammler veränderbar ist. Es ist mit der erfindungsgemäßen Druckvorrichtung möglich, eine variable Drosselung bereitzustellen, wobei ein Druck oder Druckverlust in angeschlossenen Rohren oder Abflüssen gleichzeitig veränderbar ist.

Die erfindungsgemäße Lösung weist eine Vielzahl von Vorteilen gegenüber bisher bekannten Drosselvorrichtungen auf. Die Hülse der erfindungsgemäßen Drosselvorrichtung weist eine zweidimensionale Oberfläche auf, auf der Öffnungen angeordnet werden können. Dadurch ist es möglich, Öffnungen in einer Vielzahl von Reihen oder anderen geometrischen Anordnungen vorzusehen. Indem die Hülse im Inneren des Sammlers angeordnet ist, ist es möglich, die Abflüsse an dem Sammler in einer zur Anordnung der Öffnungen auf der Hülse korrespondierenden Anordnung anzubringen. Da zwischen der Außenwand der Hülse und der Innenwand des Sammlers Dichtungen angeordnet sind, welche einen Austausch des Fluids zwischen den Öffnungen der Hülse in dem Zwischenraum zwischen Außenwand und Innenwand verhindern, wird jeder Abfluss individuell mit der Durchflussmenge einer Öffnung versorgt. In der einfachsten Form kann eine Dichtung durch eine flächige Passung der Hülse an der Innenwand des Sammlers gebildet werden. Da die Hülse gegenüber dem Sammler relativ bewegbar ist, kann durch eine Bewegung der Hülse gleichzeitig eine Vielzahl von Öffnungen in der Hülse gegenüber den Abflüssen bewegt werden. Durch diese Bewegung wird der Querschnitt der Fluidverbindungen zwischen dem Zufluss und den jeweiligen Abflüssen verändert, indem beispielsweise bei maximalem Querschnitt genau die Öffnung in der Hülse dem Abfluss gegenüber steht, während im geschlossenen Zustand die Außenwand der Hülse den Abfluss verschließt. Entsprechend sind durch geeignete Positionen der Hülse die Querschnitte der Fluidverbindung auf alle Werte dazwischen einstellbar.

Insgesamt wird erfindungsgemäß eine Drosselanordnung oder eine variable Drossel zur Verfügung gestellt, bei der bei hohen Lasten keine zusätzlichen Druckverluste auftreten und bei kleinen Lasten der Dampferzeuger stabil betrieben werden kann. Die variable Drossel kann leistungsabhängig geschaltet werden. Hierbei wird die Drossel geschaltet, wenn sie auch benötigt wird, sodass der Druckverlust nur erfolgt, wenn der Dampferzeuger bei kleinen Lasten oder Anfahren läuft. Die erfindungsgemäße Drosselvorrichtung kann mit unterschiedlichen Arbeitsmedien oder Fluiden betrieben werden, wie beispielsweise mit flüssigen Medien, wie Öl oder Wasser und gasförmigen Medien, wie Dampf. Vorzugsweise wird Wasser verwendet.

Vorteilhafte Weiterbildungen der Erfindung sind in den Unteransprüchen gegeben.

Gemäß einem Ausführungsbeispiel der Erfindung kann vorgesehen werden, dass der Querschnitt der Außenwand der Hülse und der Innenwand des Sammlers rotationssymmetrisch ausgebildet ist. Dies erlaubt eine einfache Fertigung und ermöglicht es insbesondere, die Abdichtung zwischen Hülse und Sammler besonders einfach zu erreichen, indem die Außenwand der Hülse konzentrisch an der Innenwand des Sammlers flächig anliegt.

Darüber hinaus ermöglicht es diese rotationssymmetrische Form, in einer möglichen Ausführungsform als Relativbewegung zwischen Sammler und Hülse eine Drehbewegung vorzusehen, die besonders einfach auszuführen und anzusteuern ist.

Ferner kann vorgesehen sein, dass die Drosselvorrichtung eine Welle aufweist, die mit der Hülse derart in Eingriff steht, dass durch eine Drehung der Welle die Hülse in Rotationsbewegung versetzt werden kann. Auf diese Weise ist eine Ansteuerung, zum Beispiel durch einen Stellmotor, einfach zu realisieren.

In einer Ausführungsform ist es auch möglich, das die Hülse relativ zu dem Sammler entlang einer Translationsachse verschiebbar ist, wobei dann die Relativbewegung eine Translationsbewegung entlang dieser Translationsachse ist. Dieser ermöglicht vorteilhafter Weise die Verwendung von Antrieben, die nicht in der Lage sind, Drehbewegungen auszuführen.

Dies kann in einer Ausführungsform ein Balg sein, der mit der Hülse derart in Eingriff steht, dass durch eine Beaufschlagung des Balgs mit Druck die Hülse in die Translationsbewegung versetzbar ist. Ein hydraulischer Antrieb ist in vielen Fällen aus Sicherheitsgründen bevorzugt und ermöglicht eine Regelung ohne elektrische Installationen.

In einem weiteren Ausführungsbeispiel kann vorgesehen werden, dass das Steuerelement als Kolben ausgebildet ist, wobei eine Druckdifferenz zwischen einem Innenbereich des Steuerelementes und einem Teilbereich des Sammlers erzeugbar ist. Hierbei kann ein Antrieb bereitgestellt werden, der aufgrund einer Druckdifferenz wirkt. Das Steuerelement oder die Hülse kann hierbei an einer Seite geschlossen sein, so dass sich eine Kammer im Inneren des Steuerelementes bildet, die eine hintere Stirnseite aufweist. Diese hintere Stirnseite trennt den Innenbereich des Steuerelementes gegenüber einem Teil des Sammlers ab, der nicht das Steuerelement oder die Hülse umschließt. Auf diese Weise entstehen zwei Druckkammern, nämlich eine erste Druckkammer im Inneren des Steuerelementes oder der Hülse und eine zweite Druckkammer im hinteren Bereich des Sammlers. Durch Steuerung oder Regelung der Druckdifferenz, beispielsweise durch Beaufschlagung mit Druck der hinteren Druckkammer in dem Sammler, kann das Steuerelement oder die Hülse bewegt werden, so dass eine Kolbenbewegung als Translationsbewegung hervorgerufen wird. Der Sammler kann hierbei als Zylinder ausgeführt sein, in dem sich ein zylinderförmiges Steuerelement in Abhängigkeit der erzeugten Druckdifferenz hin und her bewegen kann.

Ferner kann es vorgesehen sein, dass bei der Drosselvorrichtung ein Magnet außerhalb des Sammlers vorgesehen ist und die Hülse magnetisches Material aufweist, wobei der Magnet derart ausgebildet und angeordnet ist, dass bei einer translatorischen Bewegung des Magneten die Hülse durch magnetische Kräfte translatorisch bewegbar ist. Dies ermöglicht es auf vorteilhafte Weise, den Sammler ohne mechanische Durchbrüche für ein zu bewegendes Stellelement auszuführen, sodass eine dauerhafte Dichtigkeit der Vorrichtung gewährleistet werden kann.

Eine weitere Antriebsmöglichkeit kann mit einer Spindel erfolgen. Hierbei kann die Spindel als Welle wirken, wobei vorgesehen sein kann, dass die Spindel ein Außengewinde aufweist. Hierbei kann das Außengewinde mit einem Innengewinde der Druckvorrichtung, beispielsweise mit einem Innengewinde an dem Steuerelement oder an der der Hülse zusammenwirken.

Bei der erfindungsgemäßen Drosselvorrichtung kann vorgesehen sein, dass die Relativbewegung des Steuerelements gegenüber dem Sammler eine Translationsbewegung, eine Rotationsbewegung oder eine Kombination aus einer Translationsbewegung und einer Rotationsbewegung ist. Diese Möglichkeiten hängen unter anderem von der geometrischen Ausgestaltung von Sammler und Steuerelement ab.

In einer weiteren Ausführungsform können die Dichtungen der Drosselvorrichtung von einer vollflächig mit der Außenwand der Hülse stehenden Oberfläche des Innenraums des Sammlers gebildet werden. Bei dieser Ausführungsform ist es besonders einfach, die Dichtflächen des Sammlers und der Hülse durch Abdrehen, z.B. als rotationssymmetrische Form, oder Abfräsen der Werkstücke präzise und einfach herzustellen.

Es kann auch vorgesehen sein, dass die Dichtungen von der Außenwand der Hülse oder der Oberfläche der Innenwand des Sammlers hervorstehen und jeweils vollflächig in Kontakt mit der korrespondierenden gegenüberliegenden Oberfläche des Sammlers beziehungsweise der Hülse stehen. Durch die verringerte Kontaktfläche kann der Reibungswiderstand für die Relativbewegung verringert werden.

Weiterhin kann es vorgesehen sein, dass die Öffnungen sich in Bewegungsrichtung auf der Hülse erstrecken und eine sich entlang der Erstreckung ändernde Breite quer zur Bewegungsrichtung aufweisen, derart, dass ein Querschnitt einer Fluidverbindung durch die Öffnung und den korrespondierenden Abfluss durch die Relativbewegung der Hülse gegenüber der dem Sammler veränderbar ist. Es ist daher auf vorteilhafte Weise möglich, den Gesamtquerschnitt einer Fluidverbindung, zwischen dem Innenraum der Hülse und dem jeweiligen Abfluss, gemäß einer vorgegebenen Kennlinie in Abhängigkeit von der Relativposition zwischen Hülse und Sammler zu ändern, indem die Breite der Öffnung quer zur Bewegungsrichtung in Abhängigkeit von der Erstreckung in der Bewegungsrichtung unterschiedlich ausgelegt wird.

Ferner kann es vorgesehen sein, dass die Öffnungen in der Hülse oder die Abflüsse in dem Sammler aus einer Mehrzahl von Teilöffnungen gebildet werden. Durch verschiedene Querschnittsflächen der Teilöffnungen ist es beispielsweise möglich, den Gesamtquerschnitt einer Fluidverbindung zwischen dem Innenraum der Hülse und dem jeweiligen Abfluss in vorgegebenen Sprüngen zu ändern, indem jeweils die Hülse derart bewegt wird, dass eine vollständige Teilfläche zur Fluidverbindung beiträgt. Durch geeignete Form der Öffnungen und verbleibender Trennstege zwischen den Teilöffnungen ist es möglich, dass Toleranzen in der Bewegung der Hülse oder der Fertigung der Öffnungen, insbesondere der Position, auf die Durchflussmengen der einzelnen Abflüsse keinen Einfluss haben.

In einer Ausführungsform ist es auch möglich, dass durch die Relativbewegung zwischen der Hülse und dem Sammler die Anzahl der Teilöffnungen, durch die eine Fluidverbindung zwischen dem Innenraum der Hülse und den Abflüssen des Sammlers besteht, veränderbar ist. Hierbei ist es vorteilhaft, dass beispielsweise bei Verstopfung einer Öffnung immer noch eine Mindestdurchflussmenge durch die anderen Öffnungen gegeben ist. Darüber hinaus kann durch die Form, die Anzahl und die Anordnung der Teilöffnungen eine Stellcharakteristik der Durchflussmenge in Abhängigkeit von der Relativbewegung vorgegeben werden.

Ingesamt wird eine Drosselvorrichtung bereitgestellt, bei der eine translatorisch oder rotatorisch oder eine Kombination aus beiden bewegbare Hülse in einem Sammler angeordnet ist, wobei die Hülse mit einem lastspezifischen Lochmuster für jeden Rohranschluss versehen ist. Allen Ausführungen ist gemein, dass sich die Querschnittsfläche der Öffnungen in der Hülse entlang der Bewegungsrichtung ändert.

Nachfolgend wird die Erfindung anhand von Zeichnungen näher erläutert. Die Erfindung ist jedoch nicht auf diese dargestellten Ausführungsbeispiele beschränkt, so dass auch weitere Kombinationen und Anwendungen möglich sind. Es zeigen schematisch:
- Fig. 1: einen Längsschnitt durch ein Ausführungsbeispiel einer Drosselvorrichtung;
- Fig. 2: einen Teil-Längsschnitt durch ein Ausführungsbeispiel einer Drosselvorrichtung;
- Fig. 3: einen Längsschnitt durch ein Ausführungsbeispiel einer Drosselvorrichtung;
- Fig. 4: einen Längsschnitt durch ein Ausführungsbeispiel einer Drosselvorrichtung;
- Fig. 5: einen Längsschnitt durch ein Ausführungsbeispiel einer Drosselvorrichtung;
- Fig. 6a bis 6e: einen Querschnitt von Teilöffnungen verschiedener Ausführungsbeispiele einer Drosselvorrichtung; und
- Fig. 7: einen Längsschnitt durch ein Ausführungsbeispiel einer Drosselvorrichtung.

Es sind gleiche Bauteile mit gleichen Bezugszeichen versehen.

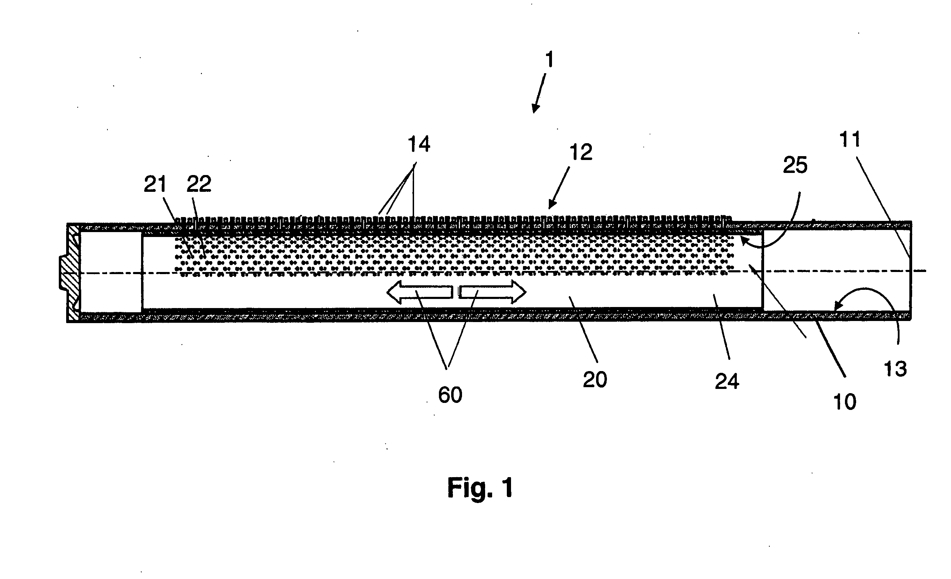

Fig. 1 zeigt einen Längsschnitt durch ein Ausführungsbeispiel einer erfindungsgemäßen Drosselvorrichtung 1. Die Drosselvorrichtung 1 weist einen Sammler 10 und eine in einem Innenraum des Sammlers 10 angeordnete Hülse 20 auf. Die Drosselvorrichtung 1 weist weiterhin einen Zufluss 11 und eine Vielzahl von Abflüssen 12 in einer Außenwand des Sammlers 10 auf, die an der Außenwand in Nippel 14 zum Anschluss von Rohrleitungen übergehen. Die Hülse 20 weist eine Vielzahl von Öffnungen 21, 22 auf, die sich durch eine Wandung der Hülse 20 von einer Innenwand 25 der Hülse 20 zu einer Außenwand 24 der Hülse 20 erstrecken. Die Hülse 20 ist in einer Bewegungsrichtung 60 relativ zu dem Sammler 10 verschiebbar. Ferner weist die Hülse 20 in Fig. 1 einen ersten kreisrunden Querschnitt auf, so dass die Hülse 20 im Innenraum des Sammlers 10, der einen zweiten kreisrunden Querschnitt aufweist, verschiebbar ist.

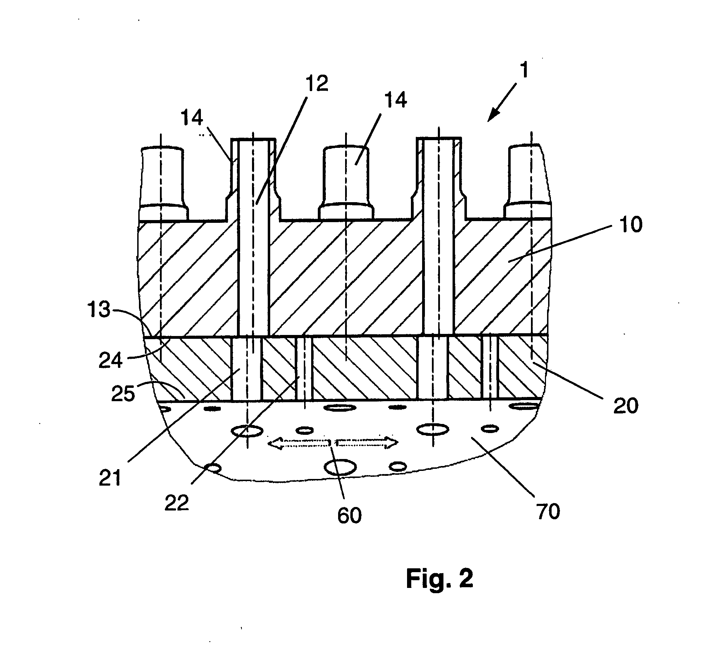

Fig. 2 zeigt einen Teilausschnitt der Fig. 1, der im Detail einen Längsschnitt durch die Außenwand des Sammlers 10 und die Wandung der Hülse 20 darstellt. In Fig. 2 sind eine Vielzahl von Öffnungen 21, 22 dargestellt, die sich von der Innenwand 25 in der Hülse 20 zu der Außenwand 24 der Hülse 20 erstrecken. Ebenfalls dargestellt sind die Abflüsse 12, die sich von einer Innenwand 13 des Sammlers 10 zu den Nippeln 14 erstrecken. Zu jedem Abfluss 12 des Sammlers 10 ist zumindest eine korrespondierende Öffnung 21, 22 in der Hülse 20 vorgesehen, so dass ein Fluid 70, in Fig. 2 beispielsweise Wasser, vom Inneren der Hülse 20 über eine der Öffnungen 21, 22 in einen der Abflüsse 12 des Sammlers 10 gelangt.

Die Außenwand 24 der Hülse 20 ist mit der Innenwand 13 des Sammlers 10 derart in flächigem Kontakt, dass kein oder nahezu kein Fluid von einer Öffnung 21, 22 in der Hülse 20 in dem Bereich zwischen der Innenwand 13 des Sammlers 10 und der Außenwand 24 der Hülse 20 zu einer anderen, benachbarten Öffnung 21, 22 übertreten kann. Der flächige Kontakt dient folglich als Dichtung zwischen benachbarten Öffnungen 21, 22 in diesem Bereich.

Es ist jedoch auch möglich, dass von der Innenwand 13 des Sammlers 10 oder von der Außenwand 24 der Hülse 20 Dichtungen angeordnet sind, die von der jeweiligen Wand hervorstehen und mit der gegenüberliegenden Wand vollflächig in Kontakt stehen, derart dass sie ebenfalls eine Öffnung 21, 22 in der Hülse 20 in dem Bereich zwischen der Innenwand 13 des Sammlers 10 und der Außenwand 24 der Hülse 20 zu einer anderen, benachbarten Öffnung 21, 22 derart abdichten, dass kein Fluid übertreten kann. Diese Dichtungen könnten Wülste aus dem Material der Hülse beziehungsweise des Sammlers sein, oder auch elastische Dichtungen aus Materialien wie Kautschuk, Silikon oder ähnlichem.

Es ist eine Fluidverbindung zwischen dem Zufluss 11 des Sammlers 10 über die Öffnungen 21, 22 in der Hülse 20 und den Abflüssen 12 in der Wandung des Sammlers 10 zu den Nippeln 14 und daran anschließbaren Rohren hergestellt, wenn die Position der Hülse 20 relativ zu dem Sammler 10 derart ist, dass die Öffnungen 21, 22 der Hülse 20 zumindest teilweise in Fluidverbindung mit den Abflüssen 12 des Sammlers 10 stehen.

Da in dem Bereich zwischen der Innenwand 13 des Sammlers 10 und der Außenwand 24 der Hülse 20 kein Fluid ausgetauscht werden kann, wird sichergestellt, dass jedes an einen Nippel 14 anschließbares Rohr die gleiche durch die Öffnung 21, 22 strömende Durchflussmenge erhält und nicht die Strömung in einem Rohr stagniert, während die Gesamtmenge durch das andere, benachbarte Rohr fließt.

Es ist weiterhin möglich, die Durchflussmengen zu reduzieren, indem sich durch eine Relativbewegung in Bewegungsrichtung 60 die Öffnung 21 und der Abfluss 12 voneinander getrennt und eine kleinere Öffnung 22 in Fluidverbindung mit dem Abfluss 12 gelangt. Durch den kleineren Querschnitt der kleinen Öffnung 22 kann bei gleichem Druck nur noch eine geringere Menge des Fluids zu dem Abfluss 12 und in ein daran anschließbares Rohr gelangen.

Es ist ebenso möglich, die Durchflussmengen zu reduzieren, indem sich durch eine Relativbewegung in Bewegungsrichtung 60 die Öffnung 21 und der Abfluss 12 gegeneinander verschoben werden, aber noch in Fluidverbindung miteinander stehen. Durch den kleineren effektiven Querschnitt der überlappenden Öffnung 21, 22 mit dem Abfluss 12 kann nur noch eine geringere Menge des Fluids zu dem Abfluss 12 und in ein daran anschließbares Rohr gelangen.

Durch eine Relativbewegung in Bewegungsrichtung 60 kann die Fluidverbindung unterbrochen werden, indem sich die Öffnung 21, 22 und der Abfluss 12 nicht mehr gegenüber stehen und eine Dichtung, im Fall der Fig. 2 die Innenwand 13 des Sammlers 10, die Öffnung 21, 22 verschließt. Hierbei ist in Fig. 1 und in Fig. 2 die Bewegungsrichtung 60 als translatorische Bewegungsrichtung vorgesehen.

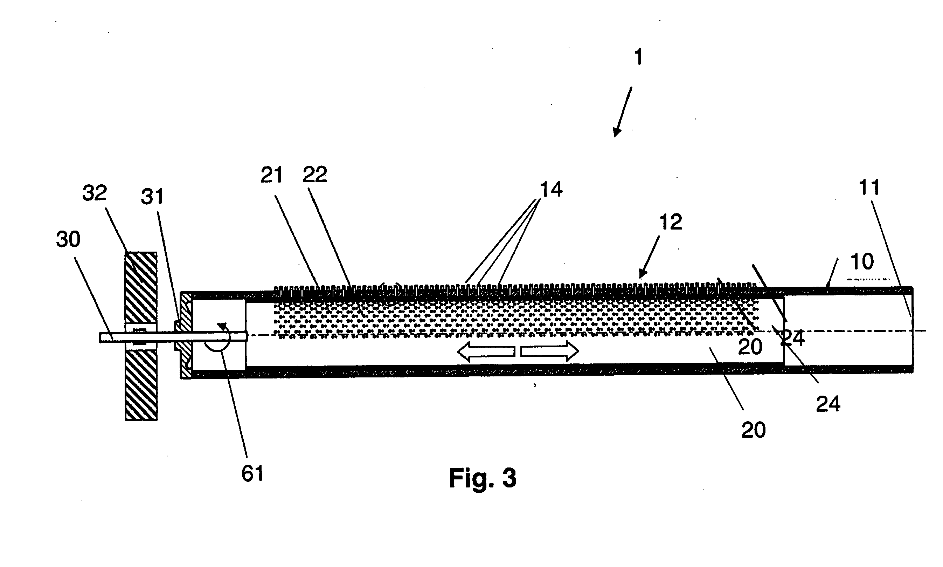

Der Querschnitt des in Fig. 1 dargestellten Sammlers 10 und der Hülse 20 kann im einfachsten Fall rotationssymmetrisch als Rohr mit kreisförmigem Querschnitt ausgeführt sein. In diesem Falle ist eine genaue Passung und damit Abdichtung zwischen Hülse 20 und Sammler 10 durch Abdrehen der Werkstücke möglich. Im Fall des rotationssymmetrischen Querschnitts kann die Relativbewegung neben der translatorischen Bewegung in der Bewegungsrichtung 60 auch eine relative Rotationsbewegung als Relativbewegung zwischen Hülse 20 und Sammler 10 dienen. Dies ist ebenfalls möglich, wenn lediglich die Außenwand 24 der Hülse 20 und die Innenwand 13 des Sammlers 10 eine Rotationssymmetrie aufweisen. Eine mögliche Ausführungsform für eine Rotationsbewegung 61 ist zu Fig. 3 näher erläutert.

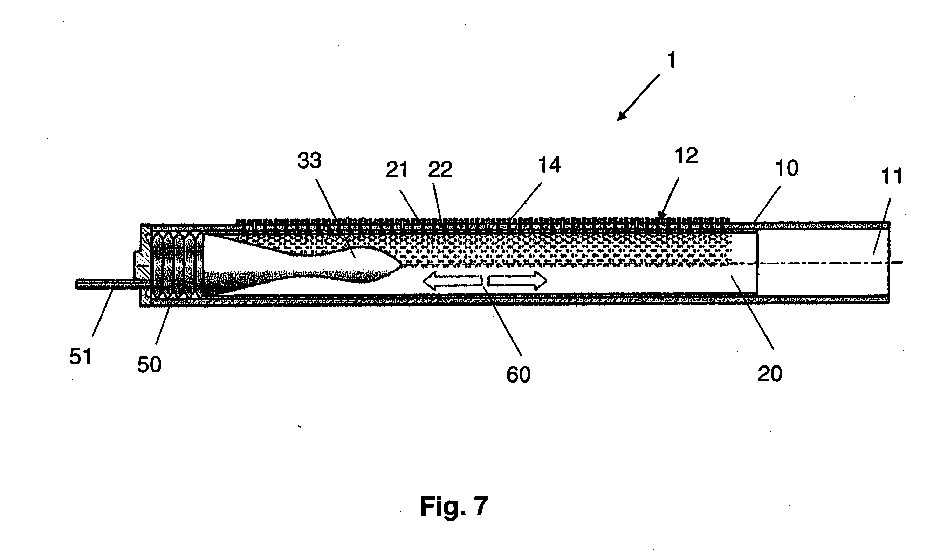

Weiterhin denkbar ist im Falle der Rotationssymmetrie ein sich in der Längsachse, das heißt entlang der durch Bewegungsrichtung 60 in Fig. 1 gegebenen Richtung verändernder Durchmesser von Hülse 20 und Innenwand 13 des Sammlers 10. Beispielsweise wäre ein vom Zufluss 11 weg abnehmender Querschnitt dazu geeignet, eine Verringerung des statischen Drucks, verursacht durch das seitlich abfließende Fluid, in Flussrichtung des Fluids zu kompensieren. Eine weitere Möglichkeit zur Druckkompensation mit einem Verdrängungskörper 33 wird in Bezug auf Fig. 7 näher erläutert.

Ist als Relativbewegung zwischen der Hülse 20 und dem Sammler 10 nur eine translatorische Bewegung in Bewegungsrichtung 60 vorgesehen, so können Innenwand 13 des Sammlers 10 und Außenwand 24 der Hülse 20 grundsätzlich beliebige korrespondierende prismenförmige Körper darstellen, die sich ineinander verschieben lassen, wie zum Beispiel quaderförmige Prismen.

Fig. 3 zeigt einen Längsschnitt durch ein Ausführungsbeispiel einer erfindungsgemäßen Drosselvorrichtung 1, bei dem die Relativbewegung eine rotatorische Bewegung in Rotationsrichtung 61 ist. Die Vorrichtung weist eine Welle 30 auf, die mit der Hülse 20 derart in Eingriff steht, dass die Hülse 20 durch eine Drehbewegung der Welle 30 die Hülse 20 in eine Drehbewegung versetzbar ist. Die Welle 30 ist in einem Wellenlager 31 an einem dem Zufluss 11 des Sammlers 10 gegenüberliegend gelagert, derart, dass die Welle sich entlang der Symmetrieachse der Rotationssymmetrie der Außenwand 24 der Hülse 20 und der Innenwand 13 des Sammlers 10 erstreckt. An der Welle 30 ist außerhalb des Sammlers 10 ein Wellenantrieb 32 vorgesehen, der dazu geeignet ist, die Welle 30 und damit die Hülse 20 um einen vorbestimmbaren Winkel zu drehen.

Es wäre auch denkbar, die Welle 30 an beiden Enden zu lagern, wenn in dem Zufluss 11 ebenfalls eine mittige Wellenhalterung vorgesehen ist. Ebenso wäre es denkbar, einen Rotationsantrieb innerhalb des Sammlers 10 anzuordnen, der die Hülse 20 unmittelbar antreibt.

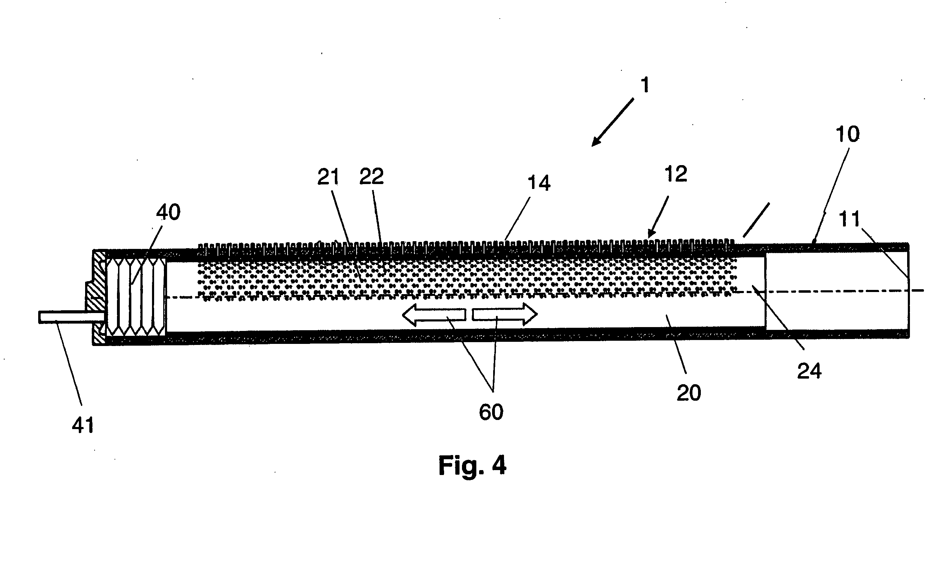

Fig. 4 zeigt einen Längsschnitt durch ein weiteres Ausführungsbeispiel einer erfindungsgemäßen Drosselvorrichtung 1, bei dem die Relativbewegung eine translatorische Bewegung in Bewegungsrichtung 60 ist. Die Vorrichtung weist einen Balg 40 auf, der mit der Hülse 20 in Eingriff steht. Der Balg 40 ist an dem Ende des Sammlers 10, das dem Zufluss 11 gegenüberliegt, in dem Innenraum des Sammlers 10 angeordnet. Der Balg 40 umschließt einen abgeschlossenen Raum und ist in der Bewegungsrichtung 60 dehnbar. Der Sammler 10 weist weiterhin eine Verbindung zu einer Hydraulikleitung 41 auf, über die der Balg 40 mit Druck beaufschlagbar ist. Durch Erhöhung des Drucks in der Hydraulikleitung 41 dehnt sich der Balg 40 aus und verschiebt die Hülse 20 in der Bewegungsrichtung 60 auf den Zufluss 11 zu. Wird der Druck erniedrigt und die Hydraulikleitung 41 zu einem Reservoir geöffnet, so wird der Balg 40 durch den Druck des Fluids zusammengepresst und die Hülse 20 bewegt sich in entgegen gesetzter Richtung.

Es wäre auch denkbar, statt des Balgs 40 einen beweglichen Hydraulikkolben in dem Sammler 10 vorzusehen, der mit der Hülse 20 in Eingriff steht und das Volumen des Innenraums des Sammlers 10 in einen mit Hydraulikflüssigkeit gefüllten, von dem Zufluss 11 abgewandten Bereich und einen mit dem Fluid gefüllten Bereich aufteilt, in dem sich auch die Hülse 20 befindet. Die Funktion des Hydraulikkolbens entspricht ansonsten der des Balgs 40.

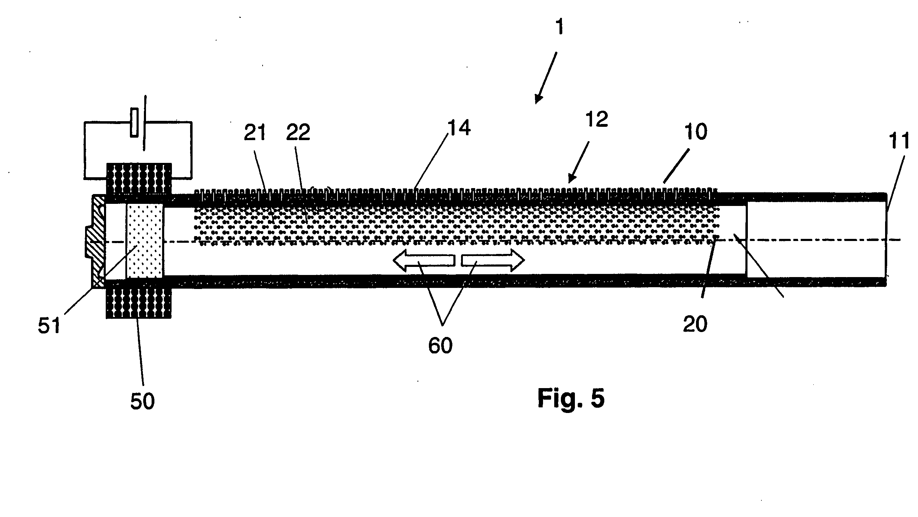

Fig. 5 zeigt einen Längsschnitt durch ein weiteres Ausführungsbeispiel einer erfindungsgemäßen Drosselvorrichtung 1, bei dem die Relativbewegung eine translatorische Bewegung in Bewegungsrichtung 60 ist. Die Drosselvorrichtung 1 weist einen Hubmagneten 50 auf, der an dem Ende des Sammlers 10, das dem Zufluss 11 entgegen gesetzt ist, außen um den Sammler 10 herum angeordnet ist. Weiterhin weist die Hülse 20 zumindest einen magnetischen Teil 51, z.B. einen Permanentmagneten, auf, der als längsverschiebbarere Anker für den Hubmagneten 50 dient. Ein Magnetfeld des Hubmagneten 50 übt dadurch eine Kraft auf die Hülse 20 aus. Der Hubmagnet 50 ist auf diese Weise in der Lage, die Hülse 20 entlang der Bewegungsrichtung 60 in dem Sammler 10 zu bewegen. Zweckmäßig wird die Hülse 20 dabei durch ein elastisches Mittel, zum Beispiel eine Feder, rückgesetzt. Durch Beaufschlagung des Hubmagneten 50 mit unterschiedlichen Strömen wird auf diese Weise die Hülse axial verstellt und damit die Drossel gesteuert.

Bei einem Antrieb der Hülse 20 mittels Hubmagnet 50 ist es insbesondere vorteilhaft, dass keine Durchführungen für bewegte Teile an dem Sammler 10 erforderlich sind, so dass eine langfristige Dichtigkeit gewährleistet ist.

Ferner ist auch ein Verschiebemechanismus möglich, bei dem anstelle eines Magneten 50 oder anstelle einer Hydraulikleitung 41 ein Bimetall eingesetzt wird.

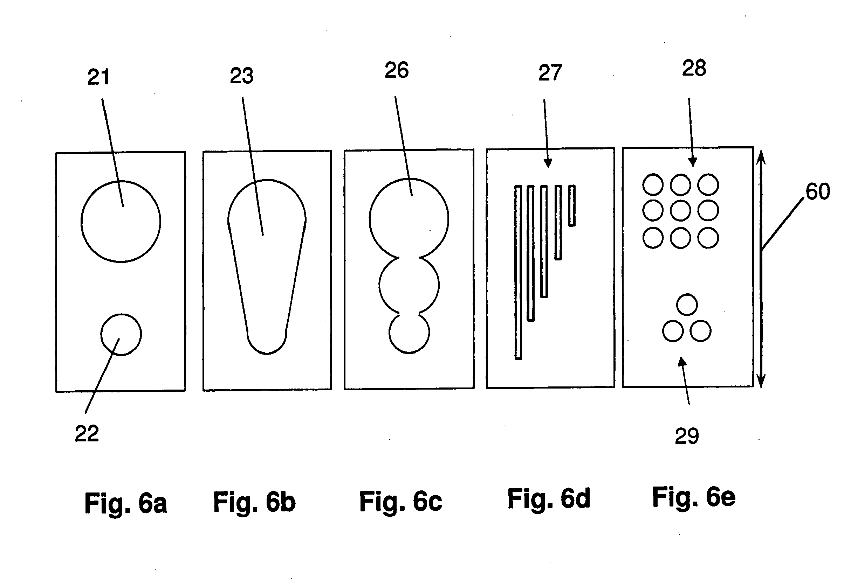

Fig. 6a, 6b, 6c, 6d und 6e zeigen jeweils einen Querschnitt von Öffnungen oder Teilöffnungen verschiedener Ausführungsbeispiele einer Drosselvorrichtung 1, wobei die dargestellten Öffnungen oder Teilöffnungen jeweils an der Hülse 20 einmal oder mehrfach angeordnet sein können. Auch ist es möglich, dass an der Hülse 20 mehrere Ausführungsbeispiele der Fig. 6a - 6e miteinander kombiniert verwendet werden. Unter Teilöffnungen werden hierbei Öffnungen 21, 22 verstanden, die mit mindestens zwei Öffnungen beliebiger Geometrie ein Lochmuster bilden oder mindestens einen veränderlichen Querschnitt in Bezug auf die Bewegungsrichtung 60 aufweisen. Beispiele für Teilöffnungen sind in Fig. 6a - 6e gegeben. Für die Variabilität der Drosselvorrichtung kann eine einzelne Öffnung oder ein Lochmuster verwendet werden, das in der Bewegungsrichtung 60 einen zunehmenden und/oder abnehmenden lichten Querschnitt mit einer Öffnung oder mehrere Öffnungen aufweist.

Fig. 6a zeigt hierbei zwei Öffnungen 21, 21, die jeweils so weit von einander in Bewegungsrichtung 60 beabstandet sind, dass nur jeweils eine von beiden in Fluidverbindung mit dem korrespondierenden Abfluss 12 stehen kann. Eine derartige Ausführungsform erlaubt es daher auf einfache Weise, zwei diskrete Durchflussmengen einzustellen.

Die beiden Öffnungen 21, 22 der Fig. 6a sind Teil eines Lochmusters und können als Teilöffnungen aufgefasst werden. Sie weisen jeweils kreisrunde Querschnitte auf, wobei ein erster Querschnitt der ersten Öffnung 21 größer als ein zweiter Querschnitt der zweiten Öffnung 22 ist. Beide kreisrunden Querschnitte liegen mit ihren Mittelpunkten auf einer vertikal verlaufenden Achse.

Fig. 6b zeigt hingegen eine Öffnung 23 mit einem kontinuierlich abnehmenden effektiven Querschnitt für die Fluidverbindung. Fig. 6b zeigt somit eine einzige Öffnung, die aus den Öffnungen 21, 22 der Fig. 6a entstanden ist, indem Tangenten an den Kreisen so angeordnet worden sind, dass sich die beiden Kreise mit jeweils einer Tangente auf der rechten Seite der Öffnung und einer Tangenten auf der linken Seite der Öffnung verbinden lassen. Hierbei verändert sich die Breite der einzigen Öffnung 23 sich in Bewegungsrichtung 60 von einer maximalen Breite kontinuierlich und linear zu einer minimalen Breite.

Der Querschnitt der Fluidverbindung zwischen Zufluss 11 und einem einzelnen Abfluss 12 ist maximal, wenn der Abfluss 12 einen Durchmesser aufweist, der der breitesten Stelle der in Fig. 6b dargestellten Öffnung entspricht und die Hülse derart zu dem Sammler 10 positioniert ist, dass der Abfluss 12 über diesem breitesten Bereich der Öffnung 23 angeordnet ist. Wird die Position des Abflusses 12 relativ zu der Hülse 20 derart verlagert, dass sich der Abfluss 12 über einem schmaleren Bereich der Öffnung 23 befindet, in Fig. 6b von oben nach unten, nimmt der Querschnitt der Fluidverbindung ab und die Durchflussmenge wird reduziert.

Die Öffnung der Fig. 6b weist eine konisch verlaufende Geometrie auf, die die beiden Öffnungen der Fig. 6a einschließt, indem das Zwischenstück zwischen den beiden kreisrunden Öffnungen unterschiedlicher Größe entfernt wurde. Somit handelt es sich bei der Öffnung der Fig. 6b nach der gegebenen Definition um eine Teilöffnung.

Fig. 6c zeigt ähnlich der Fig. 6b eine Öffnung 26, die eine Veränderung des effektiven Querschnitts der Fluidverbindung und damit der Durchflussmenge in drei Stufen, entsprechend den drei dargestellten Teilöffnungen, ermöglicht. Die Teilöffnungen sind in einer Reihe entlang der Bewegungsrichtung 60 angeordnet und überlappen einander. Die Teilöffnungen sind drei sich berührenden kreisrunde Öffnungen, wobei die erste kreisrunde Öffnung am oberen Ende der Öffnungsanordnung vorhanden ist und die kleinste kreisrunde Öffnung am unteren Ende der Öffnungsanordnung vorhanden ist. Da sich die drei kreisrunden Öffnungen berühren, entsteht eine einzige Öffnung 26. Da die Teilöffnungen der Fig. 6c miteinander verbunden sind, ist ein Übergang ohne Unterbrechung des Durchflusses möglich, im Gegensatz zu dem Ausführungsbeispiel der Fig. 6a. Ferner wäre es auch möglich, dass sich die Teilöffnungen in Fig. 6c nicht berühren und somit ein Lochmuster aus drei einzelnen Öffnungen bilden.

Fig. 6d zeigt eine andere Ausformung mit Teilöffnungen, die ein Lochmuster 27 bilden, wobei die Teilöffnungen eine Veränderung des effektiven Querschnitts der Fluidverbindung und damit der Durchflussmenge in fünf Stufen, entsprechend den fünf dargestellten Teilöffnungen, ermöglichen.

Das Lochmuster 27 der Fig. 6d weist fünf rechteckigen Teilöffnungen auf, die von links nach rechts in ihrer axialen Länge abnehmen. Hierbei ist der Versatz der Enden in vertikaler Richtung nach unten angeordnet und gleichmäßig abnehmend in vertikaler Richtung von links nach rechts, während die Enden der Teilöffnungen in vertikaler Richtung nach oben alle auf einer horizontal gedachten Linie enden.

Die Teilöffnungen der Fig. 6d sind somit parallele, in Bewegungsrichtung 60 ausgerichtete streifenförmige Teilöffnungen. Die Breite der Teilöffnungen ist so ausgelegt, dass alle gleichzeitig unter einem korrespondierenden Abfluss 12 angeordnet werden können. Die Länge der Streifen ist jedoch in Bewegungsrichtung 60 unterschiedlich, sodass an einem oberen Ende alle Streifen zu dem Querschnitt der Fluidverbindung beitragen. In Bewegungsrichtung endet in gleichmäßigen Abständen jeweils ein Streifen, sodass sich bei einer Verschiebung der Hülse 20 relativ zu dem Sammler 10 die Zahl der Streifen, die zu einer Fluidverbindung zu dem Abfluss 12 beitragen, jeweils um eins abnimmt, bis die Verbindung unterbrochen ist. Auf diese Weise ist es besonders einfach, eine Kennlinie mit nahezu linearer Abhängigkeit der Durchflussmenge von der Position bereitzustellen.

Fig. 6e zeigt eine andere Ausformung der Teilöffnungen, die eine Einstellung zweier diskreter Durchflussmengen erlaubt. Die Teilöffnungen sind in zwei Gruppen angeordnet, wobei die erste Gruppe als erstes Lochmuster 28 und die zweite Gruppe als zweites Lochmuster 29 ausgebildet ist. Wie bei Fig. 6a sind diese jeweils so weit von einander in Bewegungsrichtung 60 beabstandet, dass nur jeweils eine den beiden Gruppen in Fluidverbindung mit dem korrespondierenden Abfluss 12 stehen kann. Die Gruppen weisen eine jeweils unterschiedliche Anzahl von Teilöffnungen auf, die jeweils einen gleichen Querschnitt haben. Daher ist es ohne Werkzeugwechsel und geometrischer Analysen möglich, ein festes ganzzahliges Verhältnis zwischen den Querschnitten der Fluidverbindung für die beiden Positionen vorzugeben.

Das erste Lochmusters 28 der Fig. 6e weist neun im Quadrat angeordnete kreisrunde Öffnungen auf, die einen identischen Durchmesser haben. Ferner weist das zweite Lochmusters 29 drei kreisrunde Öffnungen auf, die den gleichen Querschnitt haben wie die Öffnungen des ersten Lochmusters 28. Hierbei sind die drei Öffnungen des zweiten Lochmusters 29 in einem Dreieck angeordnet, wobei zwei Öffnungen auf einer gemeinsamen horizontalen Linie angeordnet sind und die dritte Öffnung mittig darüber in vertikaler Richtung vorhanden ist. Ferner sind die beiden Lochmuster 28, 29 so zueinander angeordnet, dass die Öffnung an einer nach oben gerichteten Dreiecksspitze des Lochmusters 29 mit der mittleren vertikalen Reihe des ersten Lochmusters 28 in Flucht steht.

Insgesamt ist es möglich, die beispielhaft dargestellten Öffnungen der Fig. 6a - 6e nicht nur als eine Öffnung mit einer einzelnen geschlossenen Fläche auszuführen, sondern auch als eine Gruppe von Teilöffnungen bereitzustellen. Hierbei ist es möglich verschiedene Geometrien von Öffnungen einer Gruppe zuzuordnen, wie beispielsweise in Fig. 6a, 6d und 6e dargestellt. Auch ist es möglich einzelne Öffnungen bereitzustellen, die durch Verbinden von einzelnen Öffnungen eine neue Formgebung erhalten, wie beispielsweise in Fig. 6b und 6c dargestellt. Somit ist es möglich beispielsweise kreisrunde Öffnungen, rechteckige Öffnungen, quadratförmige Öffnungen, ellipsenförmige Öffnungen miteinander zu einem Lochmuster zu kombinieren, wie beispielsweise in Fig. 6a, 6d, 6e gezeigt oder basierend auf diesen geometrischen Formen alleine oder in Kombination eine einzelnen Öffnung herzustellen, wie beispielsweise in Fig. 6b und 6c gezeigt.

Prinzipiell ist es auch möglich, die Abflüsse 12 auf mehrere Teilöffnungen aufzuteilen, jedoch ist es bei den Abflüssen zumindest fertigungstechnisch schwieriger, diese wieder in einem Nippel 14 für den Anschluss eines Rohres zu vereinigen, während bei der Hülse 20 lediglich die Teilöffnungen durch die Hülse zu dem gemeinsamen Zufluss im Innenraum der Hülse zu fertigen sind.

Es ist dabei möglich, die Teilöffnungen in Größe, Form und Anordnung derart auszulegen, dass nur jeweils eine Teilöffnung eine Fluidverbindung zwischen Zufluss 11 und einem einzelnen Abfluss 12 bereitstellt, oder dass auch mehrere Teilöffnungen gleichzeitig eine Fluidverbindung bereitstellen. Weiterhin ist es möglich, durch die Anordnung und Form eine vorgegebene Kennlinie für die Durchflussmenge in Abhängigkeit von der Relativbewegung der Hülse 20 gegenüber dem Sammler 10 bereitzustellen.

Fig. 7 zeigt einen Längsschnitt durch ein Ausführungsbeispiel einer erfindungsgemäßen Drosselvorrichtung 1, die im Wesentlichen der Ausführungsform der Fig. 4 entspricht. Zusätzlich weist die Drosselvorrichtung 1 einen Verdrängungskörper 33 auf, der in den Innenraum der Hülse 20 hineinragt. Das durch den Zufluss 11 in den Sammler 10 strömende Fluid fließt im Wesentlichen von dem Zufluss 11 in Bewegungsrichtung 60 in den Sammler 10 hinein, wobei jeweils seitlich durch die Öffnungen 20, 21 in der Hülse 20 und die Abflüsse 12 das Fluid den Innenraum verlässt. Daher nimmt mit zunehmendem Abstand von dem Zufluss der statische Druck des Fluids ab und die Durchflussmengen des in die einzelnen anschließbaren Rohre durch die Nippel 14 abfließenden Fluids nimmt bei konstantem Querschnitt der Öffnungen 21, 22 ebenfalls ab. Um dies auszugleichen, ist es zum einen möglich, den Durchmesser des Sammlers 10 und der Hülse 20 in Bewegungsrichtung 60 zu verringern. Dies ist dann möglich, wenn die Hülse 20 nur rotatorisch bewegt wird. Ist eine translatorische Bewegungsrichtung 60 der Hülse 20 vorgesehen, so kann stattdessen der Verdrängungskörper 33 vorgesehen werden. Der Verdrängungskörper 33 ist derart geformt, dass er die Querschnittsfläche im Innenraum der Hülse 20 mit zunehmendem Abstand von dem Zufluss 11 derart verringert, dass der Druckverlust durch das abfließende Fluid ausgeglichen wird. Damit ist an allen Öffnungen der Hülse 20 ein gleicher Druck möglich, sodass auch durch alle Öffnungen 21, 22 mit jeweils gleichem Querschnitt und die damit in Fluidverbindung stehenden Abflüsse 12 die gleiche Durchflussmenge an Fluid strömt. Alle an die Nippel 14 anschließbaren Rohre werden von der gleichen Durchflussmenge an Fluid durchströmt.

## Patentansprüche

1. Drosselvorrichtung zur Veränderung eines Drucks eines Fluids in einer Vielzahl von parallelen Abflüssen, wobei die Drosselvorrichtung (1) aufweist:
einen Sammler (10) mit einem Zufluss (11) und einer Vielzahl von Abflüssen (12) für das Fluid, ein Steuerelement (20), das zumindest teilweise in einem Innenraum des Sammlers (10) bewegbar angeordnet ist und eine Vielzahl von Öffnungen (21, 22) aufweist,
wobei die Öffnungen (21, 22) in dem Steuerelement (20) und die Abflüsse (12) in dem Sammler (10) derart ausgebildet und angeordnet sind, dass der Querschnitt einer Vielzahl von Fluidverbindungen zwischen dem Innenraum des Sammlers (10) und einer Vielzahl von Abflüssen (12) des Sammlers (10) durch eine Relativbewegung des Steuerelements (20) gegenüber dem Sammler (10) veränderbar ist,
**dadurch gekennzeichnet,**
**dass** das Steuerelement eine Hülse (20) ist,
wobei die Öffnungen (21, 22) in der Hülse (20) derart angeordnet sind, dass sie zu den Abflüssen (12) des Sammlers (10) korrespondieren,
wobei zwischen Hülse (20) und Sammler (10) Dichtungen vorgesehen sind, sodass in einem Bereich zwischen einer Außenwand (24) der Hülse (20) und einer Innenwand (13) des Innenraum des Sammlers (10) keine Fluidverbindung zwischen den Öffnungen (21, 22) der Hülse (20) vorhanden ist.

2. Drosselvorrichtung nach Anspruch 1,
**dadurch gekennzeichnet,**
**dass** ein Querschnitt von der Außenwand (24) der Hülse (20) und der Innenwand des Sammlers (10) rotationssymmetrisch ausgebildet ist.

3. Drosselvorrichtung nach Anspruch 1 oder Anspruch 2,
**dadurch gekennzeichnet,**
**dass** die Relativbewegung eine Rotationsbewegung (61) ist.

4. Drosselvorrichtung nach Anspruch 1 oder Anspruch 2,
**dadurch gekennzeichnet,**
**dass** die Relativbewegung eine Translationsbewegung (60) ist.

5. Drosselvorrichtung nach Anspruch 1 oder Anspruch 2,
**dadurch gekennzeichnet,**
**dass** die Relativbewegung eine Kombination aus Translationsbewegung (60) und Rotationsbewegung (61) ist.

6. Drosselvorrichtung nach Anspruch 3 oder 5,
**dadurch gekennzeichnet,**
**dass** die Drosselvorrichtung (1) eine Welle (30) aufweist und die Hülse (20) mit der Welle (30) in Eingriff steht, derart, dass durch Drehung der Welle (30) die Hülse (20) in die Rotationsbewegung (61) versetzbar ist.

7. Drosselvorrichtung nach einem der Ansprüche 4 bis 6,
**dadurch gekennzeichnet,**
**dass** die Hülse (20) relativ zu dem Sammler (10) entlang einer Translationsachse zur Ausführung der Translationsbewegung (60) verschiebbar ist.

8. Drosselvorrichtung nach Anspruch 4 bis 7,
**dadurch gekennzeichnet,**
**dass** die Drosselvorrichtung (1) einen Balg (40) aufweist, der mit der Hülse (20) in Eingriff steht, derart, dass durch Beaufschlagung des Balgs (40) mit Druck die Hülse (20) in die Translationsbewegung (60) versetzbar ist.

9. Drosselvorrichtung nach Anspruch 4 bis 8,
**dadurch gekennzeichnet,**
**dass** das Steuerelement (20) als Kolben ausgebildet ist, wobei eine Druckdifferenz zwischen einem Innenbereich des Steuerelementes (20) und einem Teilbereich des Sammlers (10) erzeugbar ist.

10. Drosselvorrichtung nach Anspruch 4 bis 9,
**dadurch gekennzeichnet,**
**dass** die Drosselvorrichtung (1) einen Magneten (50) außerhalb des Sammlers (10) aufweist, wobei die Hülse (20) ein magnetisches Material (51) aufweist und der Magnet (50) derart ausgebildet und angeordnet ist, dass bei einer translatorischen Bewegung des Magneten (50) die Hülse (20) durch magnetische Kräfte in die Translationsbewegung (60) versetzbar ist.

11. Drosselvorrichtung nach einem der Ansprüche 5 bis 10,
**dadurch gekennzeichnet,**
**dass** die Drosselvorrichtung (1) eine Spindel als Welle (30) aufweist, wobei die Spindel ein Außengewinde aufweist, das mit einem Innengewinde des Steuerelementes (20) zusammenwirkt.

12. Drosselvorrichtung nach einem der Ansprüche 1 bis 11,
**dadurch gekennzeichnet,**
**dass** die Dichtungen von einer vollflächig in Kontakt mit der Außenwand (24) der Hülse (20) stehenden Oberfläche des Innenraums des Sammlers (10) gebildet werden.

13. Drosselvorrichtung nach einem der Ansprüche 1 bis 11,
**dadurch gekennzeichnet,**
**dass** die Dichtungen von der Außenwand der Hülse (20) oder der Oberfläche des Innenraums des Sammlers (10) hervorstehen und jeweils vollflächig in Kontakt mit der korrespondierenden gegenüberliegenden Oberfläche des Sammlers (10) oder der Hülse (20) stehen.

14. Drosselvorrichtung nach einem der Ansprüche 1 bis 13,
**dadurch gekennzeichnet,**
**dass** die Öffnungen (21, 22) sich in Bewegungsrichtung (60) auf der Hülse (20) erstrecken und eine sich entlang der Erstreckung ändernde Breite quer zur Bewegungsrichtung (60) aufweisen, derart, dass ein Querschnitt einer Fluidverbindung durch die Öffnung (21, 22) und den korrespondierenden Abfluss (12) durch die Relativbewegung der Hülse (20) gegenüber dem Sammler (10) veränderbar ist.

15. Drosselvorrichtung nach einem der Ansprüche 1 bis 14,
**dadurch gekennzeichnet,**
**dass** die Öffnungen (21, 22) in der Hülse (20) oder die Abflüsse (12) in dem Sammler (10) aus einer Mehrzahl von Teilöffnungen (21 - 27) gebildet werden.

16. Drosselvorrichtung nach Anspruch 15,
**dadurch gekennzeichnet,**
**dass** die Teilöffnungen (21 - 27) derart angeordnet sind, dass durch die Relativbewegung zwischen der Hülse (20) und dem Sammler (10) die Anzahl der Teilöffnungen (21 bis 27), durch die eine Fluidverbindung zwischen dem Innenraum der Hülse (20) und den Abflüssen (12) des Sammlers (10) entsteht, veränderbar ist.

17. Drosselvorrichtung nach einem der Ansprüche 1 bis 16,
**dadurch gekennzeichnet,**
**dass** die Drosselvorrichtung (1) einen im Inneren der Hülse (20) angeordneten Verdrängungskörper (33) aufweist, der derart geformt ist, dass ein statischer Druck an den Öffnungen (21, 22) zumindest bei einer Durchflussmenge entlang der Hülse (20) gleich ist.

## Claims

1. A throttle device for varying the pressure of a fluid in a plurality of parallel outlets, wherein said throttle device (1) comprises:
a header (10) comprising an inlet (11) and a plurality of outlets (12) for the fluid,
a control element (20) that is mounted so as to be at least partially displaceable in an internal chamber of said header (10) and comprises a plurality of orifices (21, 22),
wherein said orifices (21, 22) in said control element (20) and said outlets (12) on said header (10) are configured and positioned such that the cross-section of a plurality of fluid communication routes between said internal chamber of said header (10) and a plurality of outlets (12) on said header (10) can be varied by means of a relative movement of said control element (20) in relation to said header (10),
**characterized in that**
said control element is a sleeve (20),
wherein said orifices (21, 22) are disposed in said sleeve (20) such that they correspond to said outlets (12) of said header (10),
wherein between said sleeve (20) and said header (10) seals are provided such that in a region between an outside surface (24) of said sleeve (20) and an inside surface (13) of said internal chamber of said header (10) no fluid communication exists between said orifices (21, 22) in said sleeve (20).

2. The throttle device according to claim 1,
**characterized in that**
a cross-section of said outside surface (24) of said sleeve (20) and said inside surface of said header (10) are rotationally symmetrical.

3. The throttle device according to claim 1 or claim 2,
**characterized in that**
said relative movement is a rotational movement (61).

4. The throttle device according to claim 1 or claim 2,
**characterized in that**
said relative movement is a translatory movement (60).

5. The throttle device according to claim 1 or claim 2,
**characterized in that**
said relative movement is a combination of translatory movement (60) and rotational movement (61).

6. The throttle device according to claim 3 or claim 5,
**characterized in that**
said throttle device (1) comprises a shaft (30) and said sleeve (20) engages said shaft (30) such that rotation of said shaft (30) can cause the rotational movement (61) of said sleeve (20).

7. The throttle device according to any one of claims 4 to 6,
**characterized in that**
said sleeve (20) is displaceable relatively to said header (10) along a translation axis for execution of the translatory movement (60).

8. The throttle device according to claim 4 to 7,
**characterized in that**
said throttle device (1) comprises a bellows (40), which engages said sleeve (20) such that the exertion of pressure on said bellows (40) can cause the translatory movement (60) of said sleeve (20).

9. The throttle device according to claim 4 to 8,
**characterized in that**
said control element (20) is implemented as a piston, wherein a pressure difference can be produced between an inner region of said control element (20) and a sub-region of said header (10).

10. The throttle device according to claim 4 to 9,
**characterized in that**
said throttle device (1) comprises a magnet (50) disposed outside said header (10), wherein said sleeve (20) comprises a magnetic material (51) and said magnet (50) is configured and positioned such that when said magnet (50) executes translatory movement said sleeve (20) can be caused to execute translatory movement (60) as a result of magnetic forces.

11. The throttle device according to any one of claims 5 to 10,
**characterized in that**
said throttle device (1) comprises a spindle as said shaft (30), which spindle has a male screw thread that cooperates with a female screw thread on said control element (20).

12. The throttle device according to one of claims 1 to 11,
**characterized in that**
said seals are formed by a surface of said internal chamber of said header (10) in plane contact with said outside surface (24) of said sleeve (20).

13. The throttle device according to any one of claims 1 to 11,
**characterized in that**
said seals project from said outside surface of said sleeve (20) or said surface of said internal chamber of said header (10) and are in each case in plane contact with the corresponding opposing surface of said header (10) or of said sleeve (20).

14. The throttle device according to any one of claims 1 to 13,
**characterized in that**
said orifices (21, 22) extend in the direction of movement (60) along said sleeve (20) and have a width, as measured at right angles to the direction of motion (60), which varies along the extension such that a cross-section of a fluid communication route through said orifice (21, 22) and the corresponding outlet (12) can be varied by a relative movement of said sleeve (20) in relation to said header (10).

15. The throttle device according to any one of claims 1 to 14,
**characterized in that**
said orifices (21, 22) in said sleeve (20) or said outlets (12) on said header (10) are formed by a plurality of sub-orifices (21 27).

16. The throttle device according to claim 15,
**characterized in that**
said sub-orifices (21, 27) are disposed such that the relative movement between said sleeve (20) and said header (10) can cause the number of said sub-orifices (21 to 27) through which a fluid communication route is formed between the interior of said sleeve (20) and said outlets (12) on said header (10) to be varied.

17. The throttle device according to any one of claims 1 to 16,
**characterized in that**
said throttle device (1) comprises a fluid displacing element (33) disposed in the interior of said sleeve (20), which fluid displacing element is shaped such that a static pressure at the orifices (21, 22) is the same along said sleeve (20) for at least one throughput.

## Revendications

1. Dispositif d'étranglement pour modifier la pression d'un fluide dans une pluralité d'orifices de sortie parallèles, dans lequel ledit dispositif d'étranglement (1) comprend:
un collecteur (10) comprenant un orifice d'entrée (11) et une pluralité d'orifices de sortie (12) pour le fluide,
un élément de contrôle (20) qui est monté de manière à être, au moins partiellement, déplaçable à l'intérieur d'une chambre interne dudit collecteur (10), et qui comprend une pluralité d'orifices (21, 22),
dans lequel lesdits orifices (21, 22) dans ledit élément de contrôle (20) et lesdits orifices de sortie (12) sur ledit collecteur (10) sont configurés et positionnés de telle sorte que la section transversale d'une pluralité de voies de communication fluidique entre ladite chambre interne dudit collecteur (10) et une pluralité d'orifices de sortie (12) sur ledit collecteur (10) peut être modifiée par un mouvement relatif dudit élément de contrôle (20) en relation avec ledit collecteur (10),
**caractérisé en ce que**
ledit élément de contrôle est un manchon (20),
lesdits orifices (21, 22) étant disposés dans ledit manchon (20) de telle sorte qu'ils correspondent auxdits orifices de sortie (12) dudit collecteur (10),
entre ledit manchon (20) et ledit collecteur (10), des joints d'étanchéité étant prévus de telle sorte que, dans une zone située entre une surface extérieure (24) dudit manchon (20) et
une surface intérieure (13) de ladite chambre interne dudit collecteur (10), aucune communication fluidique n'existe entre lesdits orifices (21, 22) dans ledit manchon (20).

2. Dispositif d'étranglement selon la revendication 1,
**caractérisé en ce que**
une section transversale de ladite surface extérieure (24) dudit manchon (20) et ladite surface intérieure dudit collecteur (10) sont symétriques en rotation.

3. Dispositif d'étranglement selon la revendication 1 ou la revendication 2,
**caractérisé en ce que**
ledit mouvement relatif est un mouvement de rotation (61).

4. Dispositif d'étranglement selon la revendication 1 ou la revendication 2,
**caractérisé en ce que**
ledit mouvement relatif est un mouvement de translation (60).

5. Dispositif d'étranglement selon la revendication 1 ou la revendication 2,
**caractérisé en ce que**
ledit mouvement relatif est une combinaison d'un mouvement de translation (60) et d'un mouvement de rotation (61).

6. Dispositif d'étranglement selon la revendication 3 ou la revendication 5,
**caractérisé en ce que**
ledit dispositif d'étranglement (1) comprend un arbre (30) et ledit manchon (20) s'engage avec ledit arbre (30) de telle sorte que la rotation dudit arbre (30) puisse provoquer le mouvement de rotation (61) dudit manchon (20).

7. Dispositif d'étranglement selon l'une quelconque des revendications 4 à 6,
**caractérisé en ce que**
ledit manchon (20) est déplaçable par rapport audit collecteur (10) le long d'un axe de translation pour effectuer le mouvement de translation (60).

8. Dispositif d'étranglement selon les revendications 4 à 7,
**caractérisé en ce que**
ledit dispositif d'étranglement (1) comprend un soufflet (40), qui s'engage avec ledit manchon (20) de telle sorte que l'exercice d'une pression sur ledit soufflet (40) puisse provoquer le mouvement de translation (60) dudit manchon (20).

9. Dispositif d'étranglement selon les revendications 4 à 8,
**caractérisé en ce que**
ledit élément de contrôle (20) est mis en oeuvre sous la forme d'un piston dans lequel une différence de pression peut être produite entre un secteur intérieur dudit élément de contrôle (20) et un sous-secteur dudit collecteur (10).

10. Dispositif d'étranglement selon les revendications 4 à 9,
**caractérisé en ce que**
ledit dispositif d'étranglement (1) comprend un aimant (50) disposé à l'extérieur dudit collecteur (10), ledit manchon (20) comprenant un matériau magnétique (51) et ledit aimant (50) étant configuré et positionné de façon que, lorsque ledit aimant (50) exécute un mouvement translatoire, ledit manchon (20) puisse être amené à exécuter un mouvement de translation (60) en résultat de forces magnétiques.

11. Dispositif d'étranglement selon l'une quelconque des revendications 5 à 10,
**caractérisé en ce que**
ledit dispositif (1) d'étranglement comprend une broche en guise d'arbre (30), ladite broche ayant un filetage mâle qui coopère avec un filetage femelle sur ledit élément de contrôle (20).

12. Dispositif d'étranglement selon l'une des revendications 1 à 11,
**caractérisé en ce que**
lesdits joints d'étanchéité sont formés par une surface de ladite chambre interne dudit collecteur (10) en contact complet avec ladite surface extérieure (24) dudit manchon (20).

13. Dispositif d'étranglement selon l'une quelconque des revendications 1 à 11,
**caractérisé en ce que**
lesdits joints d'étanchéité font saillie de ladite surface extérieure dudit manchon (20) ou de ladite surface de ladite chambre interne dudit collecteur (10) et sont dans chaque cas en contact complet avec la surface opposée correspondante dudit collecteur (10) ou dudit manchon (20).

14. Dispositif d'étranglement selon l'une quelconque des revendications 1 à 13,
**caractérisé en ce que**
lesdits orifices (21, 22) s'étendent dans le sens du mouvement (60) le long dudit manchon (20) et ont une largeur, telle que mesurée à angle droit dans le sens du mouvement (60), qui varie le long de l'extension de telle sorte qu'une section transversale d'une voie de communication fluidique à travers ledit orifice (21, 22) et que l'orifice de sortie correspondant (12) puissent être modifiés par un mouvement relatif dudit manchon (20) en relation avec ledit collecteur (10).

15. Dispositif d'étranglement selon l'une quelconque des revendications 1 à 14,
**caractérisé en ce que**
lesdits orifices (21, 22) dans ledit manchon (20) ou lesdits orifices de sortie (12) sur ledit collecteur (10) sont formés par une pluralité d'orifices secondaires (21, 27).

16. Dispositif d'étranglement selon la revendication 15,
**caractérisé en ce que**
lesdits orifices secondaires (21, 27) sont disposés de telle sorte que le mouvement relatif entre ledit manchon (20) et ledit collecteur (10) puisse entraîner la modification du nombre desdits orifices secondaires (21 à 27) à travers lesquels une voie de communication fluidique est formée entre l'intérieur dudit manchon (20) et lesdits orifices de sortie (12) sur ledit collecteur (10).

17. Dispositif d'étranglement selon l'une quelconque des revendications 1 à 16,
**caractérisé en ce que**
ledit dispositif d'étranglement (1) comprend un élément (33) de déplacement du fluide disposé à l'intérieur dudit manchon (20), ledit élément de déplacement du fluide étant conformé de telle sorte qu'une pression statique aux orifices (21, 22) soit la même le long dudit manchon (20) pendant au moins un débit.
